(19) Europäisches Patentamt

European Patent Office

Office européen des brevets

(11) Publication number: **0 007 401**
**B1**

(12) **EUROPEAN PATENT SPECIFICATION**

(45) Date of publication of patent specification: **08.04.87**

(21) Application number: **79101715.5**

(22) Date of filing: **01.06.79**

(51) Int. Cl.⁴: **G 11 B 5/60**

(54) **Magnetic transducer head support assemblies.**

(30) Priority: **27.07.78 US 928750**

(43) Date of publication of application:
**06.02.80 Bulletin 80/03**

(45) Publication of the grant of the patent:
**08.04.87 Bulletin 87/15**

(84) Designated Contracting States:
**BE CH DE FR GB IT NL SE**

(56) References cited:
**GB-A-1 464 059**
**US-A-3 202 772**
**US-A-3 310 792**
**US-A-3 489 381**

(73) Proprietor: **International Business Machines Corporation**
**Old Orchard Road**
**Armonk, N.Y. 10504 (US)**

(72) Inventor: **Watrous, Robert Bringhurst**
**7208 Golf Course Lane**
**San Jose California 95139 (US)**

(74) Representative: **Blakemore, Frederick Norman**
**IBM United Kingdom Limited Intellectual**
**Property Department Hursley Park**
**Winchester Hampshire SO21 2JN (GB)**

Courier Press, Leamington Spa, England.

## Description

This invention relates to magnetic transducer head support assemblies. Such assemblies are used to suspend magnetic head air bearing sliders over moving magnetic record media.

In view of the variable topography of magnetic record medium surfaces and the need to have the magnetic transducer head closely follow the surface at a constant spacing and attitude, the slider should be able to move at right angles to the surface, and should be able to pitch around a first axis, and to roll about a second axis normal to the first axis. It is also desirable to minimize the effect of radial and circumferential forces that are applied to the head support arm when used with a rotating disk, and to eliminate yaw.

United Kingdom Patent Specification No. GB—A—1,464,059 discloses a support arm assembly for a magnetic head, comprising a stiff element having a longitudinal axis, connected at one end to a rigid support by a resilient spring plate and carrying at the other end a flexure having two outer spaced apart resilient fingers parallel to the longitudinal axis, extending away from the support and joined at their remote ends to an inner, central third finger parallel to the two outer fingers, extending from the remote ends of the two outer fingers towards the support and having a protuberance in contact with a load beam connected to the stiff element. The introductory part of claim 1 is based on this prior art.

In the support assembly according to this prior art, the heaviest part is the load beam. In an alternative embodiment shown in Figs. 7 and 8, the flexure has an attached bent slider plate, which, however, must have a sufficient rigidity against the radial accessing forces. The rigidity was obtained by using much thicker material than that from which the rest of the flexure was made as shown in Fig. 8, and this contributes to the weight of the support assembly. The prior art also mentions the alternative of forming the flexure and the central finger from one piece of metal, but the idea was to form the whole of the spring element including the flexure and the central finger from one piece of metal, which, in order to provide the necessary rigidity in the slider plate (central finger) mentioned previously, would have to be thicker overall, complicating the flexure design, and again contributing an addition to the weight of the support assembly.

It has already been indicated herein that it is desirable for the magnetic transducer head to follow the magnetic record medium surface closely at a constant spacing. It is well known and understood in this art that inertia or weight distribution of the support assembly is a major factor affecting this following ability.

This invention is concerned with the problem of providing a support assembly which has an improved ability to follow recording surface at a constant spacing, by virtue of constructional changes which afford reduced inertia or weight distribution. The solution is set out in the characterising clause of claim 1.

In the preferred embodiment, the arm is formed from one piece of material which is flanged along part of its length to form a channel to provide the stiff portion of the arm. The arm is substantially symmetrical about the longitudinal axis and is substantially triangular with the central finger of the flexure engaged by the apex of the triangular arm. The flexure is substantially rectangular.

The protruding contact can be a protuberance on the tip of the arm or consist of a dimple formed in the central finger.

Preferably, the protuberance is located on the longitudinal axis and an axis normal thereto so that when a transducer-head-carrying slider is mounted on the central finger of the flexure, pitch and roll of the slider about those axes in response to changes in the air bearing supporting the slider is allowed for. Preferably, the protuberance is located to apply a force through the centre of gravity of the slider.

The claimed invention may be carried out in the ways described in detail below with reference to the accompanying drawings, in which:

Fig. 1 is a plan of a magnetic head support arm assembly according to this invention;

Fig. 2 is a slide view of the assembly represented in Fig. 1;

Fig. 3 is a more detailed plan of the flexure in the assembly of Fig. 1; and

Fig. 4 is a section on the line IV—IV of Fig. 3.

Referring to the drawings, a magnetic head support arm assembly includes an arm 10 made of stainless steel attached by screws 12 to a rigid support 14 made of aluminium. The support 14 is joined to a mounting segment 15 which is mounted on an actuator assembly (not shown). The mounting segment 15 may include a T-block for carrying a multiplicity of head arm assemblies for use in accessing multi-disk files.

The arm 10 has a resilient end portion 16 and a stiff triangular load beam portion 18. The triangular load beam portion 18 is provided with lateral flanges 20 which render the portion 18 stiff relative to the resilient end portion 16. A flexure 26 is attached to the load beam portion 18 of the arm 10 by welds 28.

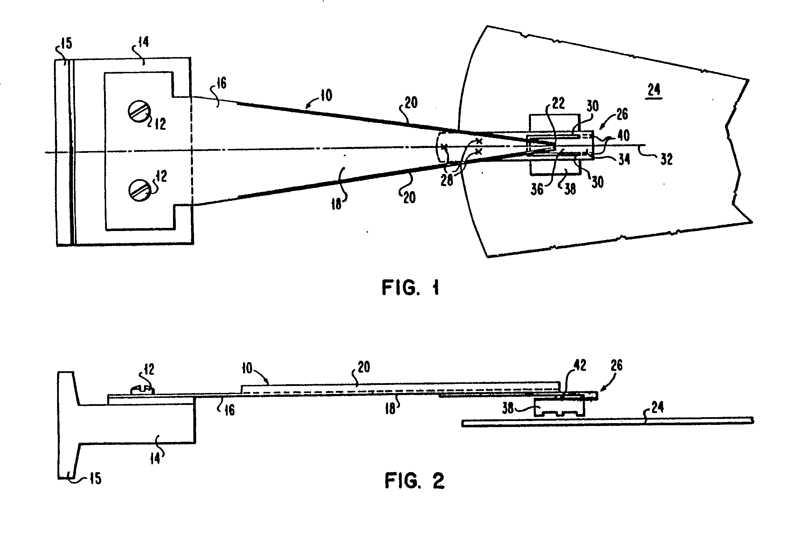

The flexure 26 is generally rectangular and formed with two narrow resilient outer fingers 30 which run parallel to the longitudinal axis 32 of the arm 10 through the tip 22 of the triangular portion 18 and the midpoint of the triangular portion 18. The longitudinal axis 32 is also the path of data track accessing followed by the head arm assembly during an accessing operation of a disk file. An axis normal to the longitudinal axis is parallel to the tangent to the path which is followed by a data track on the disk as it traverses the head transducing gap. The two outer resilient fingers 30 are joined by a less flexible cross leg 34 substantially parallel to the normal axis. As can be seen from Fig. 1, the flexure has regions which project laterally of the arm, starting adjacent the forward ones of the welds (28), and the two outer fingers (30) extend from these regions clear of the arm towards the cross leg (34). A central finger 36 extends from the cross leg 34 back towards the support 14 substantially parallel to the fingers 30.

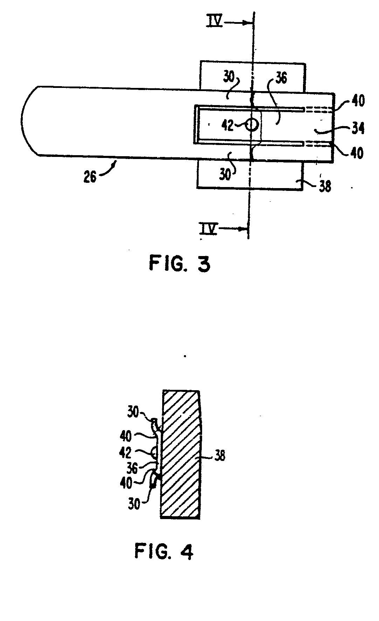

The central finger 36, which is of substantially the same thickness as the two outer resilient fingers 30, supports on its lower surface an air bearing head slider 38 which contains a magnetic transducer head. The cross leg 34 is offset 40 (Figs. 3 and 4) from the plane of the resilient fingers 30, thereby placing the plane of the central finger 36 closer to the disk 24 (Fig. 2). The offset 40 of the cross leg 34 provides a clearance between the slider 38 and the load beam portion 18 of the arm so that a roll action will not be inhibited. The offset 40 also places a load button or protuberance 42 of the central finger 36 in the plane of the resilient fingers 30, see Fig. 2. This minimizes the rubbing action of the load protuberance 42 on the load beam portion 18 thereby reducing friction and debris generation. As shown in Figs. 1 and 2, the flanges 20 extend all the way to the tip 22 of the arm 10 which contacts the protuberance 42 and provides a pivotal bearing support for the head slider 38 to hold the transducer in an operating position close to a magnetic record disk 24. The slider 38 is preferably fastened to the central finger 36 so that the protuberance 42 is located directly above the centre of gravity of the slider 38. The load beam portion 18 of the arm 10 transmits a load force to urge the slider 38 towards the disk and also transmits this force through the centre of gravity of the slider 38 by virtue of the protuberance 42. The protuberance 42 may be created by forming a dimple in the central finger 36 of the flexure 26.

The flexure 26 supports the head slider assembly 38 and allows it to pivot about the longitudinal axis and the axis which intersects it at the contact point between the top 22 of the arm 19 and the protuberance 42. The resilience of the flexure 26 provides a recentring force tending to bring the slider assembly 38 back to its static position. This contact point serves as a pivot point about which the head slider may pitch and roll, in order to follow the changing topography of the disk 34.

As the disk 24 revolves close to the slider 38, an air bearing is formed between the disk and the slider which tends to lift the slider and establish a desired head-to-disk separation. The stiffness of the load beam portion 18 of the arm 10 is such that movement of the slider away from the disk is accommodated by flexure of the resilient portion 16 of the arm 10. This has the effect of resiliently loading the slider towards the disk. If the thickness of the air bearing changes, the slider will move to bring the thickness back to its desired value. This again is accommodated by the arm pivoting about the screws 12 due to flexure of the portion 16. This would roll the slider about the normal axis but the slider can level itself by the resilience of the fingers 30, any counteracting roll of the slider relative to the assembly being taken up.

With the configuration disclosed, the entire support assembly comprising the one-piece arm 10 and one-piece flexure 26 does not experience bending forces.

**Claims**

1. A support assembly for a magnetic transducer head comprising an arm (10) having a longitudinal axis (12), one end (16) of the arm being resilient, and the remainder (18) of the arm being stiff and being triangular with lateral flanges (20), the resilient end of the arm being connected to a rigid support (14) and the other end of the arm carrying a flexure (26) for connection to the transducer head (38), the flexure being formed from a single piece of material and having two outer spaced apart resilient fingers (30) parallel to the longitudinal axis extending away from the rigid support, a crossleg (34) spanning the spacing between the remote ends of the two outer fingers, the crossleg being wider, and thereby less flexible, than two two outer fingers, and an inner central finger (36) extending parallel to the two outer fingers from the crossleg towards the rigid support, the central finger and the tip of said other end of the arm engaging one another through a protruding contact (42), the central finger being offset from the plane in which the two outer fingers lie, and the offset being substantially equal to the height of the protruding contact, characterised in that the flexure is a separate piece attached to the remainder of the arm, the crossleg is cranked where it joins each of the outer fingers so that the crossleg is provided with an offset portion (40), the central finger extends from the offset portion of the crossleg and lies in a plane parallel to the plane in which the two outer fingers lie, and the lateral flanges of the remainder of the arm extend all the way to the protruding contact (42), the flexure having regions which project laterally of the arm; the two outer fingers extending from said regions clear of the arm towards the crossleg (34).

2. An assembly as claimed in claim 1, in which the protruding contact is a protuberance on the tip of the arm.

3. An assembly as claimed in claim 1, in which the protruding contact consists of a dimple formed in the central finger.

4. An assembly as claimed in claim 3, and a transducer-head-carrying air bearing slider mounted on the central finger.

5. An assembly as claimed in claim 4, in which the protuberance is located on the longitudinal axis and on the axis normal thereto so that the flexure allows pitch and roll of the slider about these axes in response to changes in the air bearing supporting the slider.

6. An assembly as claimed in claim 5, in which the protuberance is located to apply a force through the centre of gravity of the slider.

7. An assembly as claimed in any preceding claim, in which the arm is substantially symmetrical about the longitudinal axis.

8. An assembly as claimed in any preceding claim, in which the flexure is substantially rectangular.

## Patentansprüche

1. Haltevorrichtung für einen Magnetkopf mit einem Arm (10), der eine Längsachse (32) aufweist, wobei ein Ende (16) des Armes elastisch ist, während der Rest (18) des Armes steif und dreieckig mit seitlichen Flügeln (20) ausgebildet ist, das elastische Ende des Armes mit einer starren Halterung (14) verbunden ist, während das andere Ende des Armes ein Biegeelement (26) zur Verbindung mit dem Kopf (38) trägt, wobei das Biegeelement aus einem einzigen Materialstück gebildet ist und zwei äußere beabstandete elastische Finger (30) parallel zur Längsachse, die von der starren Halterung weg verlaufen, einen Querschenkel (34), der den Zwischenraum zwischen den äußeren Enden der beiden äußeren Finger überspannt, wobei der Querschenkel breiter und dadurch weniger flexibel als die beiden äußeren Finger ist, und einen inneren mittleren Finger (36) aufweist, der parallel zu den beiden äußeren Fingern vom Querschenkel aus zur starren Halterung verläuft, der mittlere Finger und die Spitze des anderen Endes des Armes miteinander über einen vorstehenden Kontakt (42) in Eingriff stehen, der mittlere Finger aus der Ebene versetzt angeordnet ist, in der die beiden äußeren Finger liegen, und die Versetzung im wesentlichen gleich der Höhe des vorstehenden Kontaktes ist, dadurch gekennzeichnet, daß das Biegeelement ein seperates Teil ist, das am Rest des Armes angebracht ist, der Querschenkel dort, wo er in jeden der beiden äußeren Finger übergeht, gewinkelt ist, so daß der Querschenkel mit einem Versetzungsteil (40) versehen ist, der mittlere Finger vom Versetzungsteil des Querschenkels ausgeht und in einer Ebene parallel zu der Ebene verläuft, in der die beiden äußeren Finger liegen, und die seitlichen Flügel des Restes des Armes ganz bis zum vorstehenden Kontakt (42) verlaufen, das Biegeelement Bereiche aufweist, die seitlich vom Arm vorstehen, und die beiden äußeren Finger von diesen Bereichen frei vom Arm zum Querschenkel (34) verlaufen.

2. Vorrichtung nach Anspruch 1, bei der der vorstehende Kontakt eine Ausbauchung an der Spitze des Armes ist.

3. Vorrichtung nach Anspruch 1, bei der der vorstehende Kontakt aus einer Vertiefung besteht, die im mittleren Finger ausgebildet ist.

4. Vorrichtung nach Anspruch 3 mit einem den Kopf tragenden luftgelagerten Schieber, der am mittleren Finger angebracht ist.

5. Vorrichtung nach Anspruch 4, bei der die Ausbauchung auf der Längsachse und auf der dazu senkrechten Achse so angeordnet ist, daß das Biegeelement ein Kippen und Rollen des Schiebers um diese Achse auf Änderungen im Luftlager ansprechend ausführen kann, das den Schieber hält.

6. Vorrichtung nach Anspruch 5, bei der die Ausbauchung so angeordnet ist, daß eine Kraft über den Schwerpunkt des Schiebers anliegt.

7. Vorrichtung nach einem der vorhergehenden Ansprüche, bei der der Arm um seine Längsachse im wesentlichen symmetrisch ist.

8. Vorrichtung nach einem der vorhergehenden Ansprüche, bei der das Biegeelement im wesentlichen rechteckig ist.

## Revendications

1. Ensemble support pour une tête de transducteur magnétique comportant un bras (10) ayant un axe longitudinal (32), une extrémité (16) du bras étant flexible, et le reste (18) du bras étant rigide et étant de forme triangulaire avec des rebords latéraux (20), l'extrémité élastique du bras étant reliée à un support rigide (14) et l'autre extrémité du bras portant une suspension (26) pour être connecté à la tête de transducteur (38), la suspension étant formée d'une seule pièce de matériau et comportant deux doigts (30) élastiques écartés extérieurs parallèles à l'axe longitudinal s'éloignant du support rigide, une traverse (34) traversant l'espacement entre les extrémités éloignées des deux doigts extérieurs, la traverse étant plus large, et ainsi moins flexible, que les deux doigts extérieurs, et un doigt central intérieur (36) s'étendant parallèlement aux deux doigts extérieurs à partir de la traverse vers le support rigide, le doigt central et la pointe de ladite extrémité du bras étant en contact l'une avec l'autre par l'intermédiaire d'un contact saillant (42), le doigt central étant décalé du plan dans lequel les deux doigts extérieurs sont situés, et le décalage étant à peu près égal à la hauteur du contact saillant, caractérisé en ce que la suspension est une pièce séparée reliée au reste du bras, la traverse est contrecoudée à l'endroit où elle rejoint chacun des doigts extérieurs de façon à ce que la traverse soit munie d'une partie décalée (40), le doigt central s'étend à partir de la partie décalée de la traverse et est situé dans un plan parallèle au plan dans lequel sont situées les deux doigts extérieurs, et les rebords latéraux du reste du bras s'étendent tout le long de celui-ci jusqu'au contact saillant (42), la suspension comportant des régions qui se projettent latéralement par rapport au bras, les deux doigts extérieurs s'étendant à partir de ces dites régions dégagées du bras vers la traverse (34).

2. Ensemble selon la revendication 1, dans lequel le contact saillant est une protubérance de l'extrémité du bras.

3. Ensemble selon la revendication 1, dans lequel le contact saillant consiste en un bossage formé sur le doigt central.

4. Ensemble selon la revendication 3 et curseur sur coussin d'air portant une tête de transducteur montée sur le doigt central.

5. Ensemble selon la revendication 4 dans lequel la protubérance est située sur l'axe longitudinal et sur l'axe perpendiculaire à celui-ci de façon telle que la pièce flexible permette le tangage et le roulis du curseur autour de ces axes en réponse aux variations du coussin d'air portant le curseur.

6. Ensemble selon la revendication 5, dans lequel la protubérance est positionnée pour appliquer une force passant par le centre de gravité du curseur.

7. Ensemble selon l'une quelconque des revendications précédentes, dans lequel le bras est à peu près symétrique par rapport à l'axe longitudinal.

8. Ensemble selon l'une quelconque des revendications précédentes, dans lequel la suspension est à peu près rectangulaire.

FIG. 1

FIG. 2

0 007 401

FIG. 3

FIG. 4